# EUROPÄISCHE PATENTANMELDUNG

(11) **EP 2 161 088 A1**
(43) Veröffentlichungstag der Anmeldung: **10.03.2010**
(21) Anmeldenummer: 09169442.2
(22) Anmeldetag: 04.09.2009
(51) Int. Cl.: B22F 3/00

(54) **Verfahren zur Herstellung eines Bauteils und Vorrichtung hierfür**

(30) Priorität: 05.09.2008 DE 102008045984
(71) Anmelder: MTU Aero Engines GmbH, 80995 München (DE)
(72) Erfinder: Uihlein, Thomas, 85221 Dachau (DE); Steinhardt, Erich, 81377 München (DE)

(57) **Zusammenfassung**

Die Erfindung betrifft ein Verfahren zur Herstellung von Bauteilen mittels eines generativen Herstellungsverfahrens, insbesondere zur Herstellung von Bauteilen von Strömungsmaschinen, wobei das Verfahren folgende Schritte umfasst: a) Schichtweiser Auftrag von mindestens einem pulverförmigen Bauteilwerkstoff (12) auf eine Bauteilplattform (16); b) Herstellung eines Grünlings (10) des herzustellenden Bauteils mittels einem lokalen Auftrag von mindestens einem flüssigen Bindemittel, wobei mindestens eine Auftragsdüse (18) entsprechend der Schichtinformation des herzustellenden Bauteils und/oder des Grünlings (10) über die aufgetragene Bauteilwerkstoffschicht (30) geführt wird; c) Absenken der Bauteilplattform (16) um eine vordefinierte Schichtdicke; d) Wiederholen der Schritte a) bis c) bis zur Fertigstellung des Grünlings (10); e) Sintern des Grünlings (10); und f) Verdichten des gesinterten Grünlings (10) mittels eines heißisostatischen Pressverfahrens. Die Erfindung betrifft weiterhin eine Vorrichtung zur Herstellung von Bauteilen mittels eines generativen Herstellungsverfahrens, insbesondere zur Herstellung von Bauteilen von Strömungsmaschinen, mit mindestens einem, einen pulverförmigen Bauteilwerkstoff (12) aufweisenden Pulvervorratsbehälter (22) und mindestens eine Auftragsvorrichtung (20) zum schichtweisen Auftrag des mindestens einen pulverförmigen Bauteilwerkstoffs (12) auf eine verfahrbare Bauteilplattform (16) sowie mindestens einer Auftragsdüse (18) zum lokalen Auftrag von mindestens einem Bindemittel auf die Schicht des pulverförmigen Bauteilwerkstoffs (12).

## Beschreibung

Die vorliegende Erfindung betrifft ein Verfahren zur Herstellung von Bauteilen mittels eines generativen Herstellungsverfahrens, insbesondere zur Herstellung von Bauteilen von Strömungsmaschinen. Die Erfindung betrifft weiterhin eine Vorrichtung zur Herstellung von Bauteilen mittels eines generativen Herstellungsverfahrens, insbesondere zur Herstellung von Bauteilen von Strömungsmaschinen, mit mindestens einem, einen pulverförmigen Bauteilwerkstoff aufweisenden Pulvervorratsbehälter und mindestens eine Auftragsvorrichtung zum schichtweisen Auftrag des mindestens einen pulverförmigen Bauteilwerkstoffs auf eine verfahrbare Bauteilplattform.

Verfahren zur Herstellung von Bauteilen mittels eines generativen Herstellungsverfahrens sind in einer Vielzahl aus dem Stand der Technik bekannt. So beschreibt zum Beispiel die DE 10 2006 049 216 A1 ein Verfahren zur Herstellung eines als Integralrotor (Blisk) gestalteten Hochdruckturbinen-Rotors mittels eines generativen Herstellungsverfahrens, wobei ein lokales Versintern oder Verschmelzen eines schichtförmig aufgebauten metallischen Pulverbettes erfolgt. Der Aufbau der Strukturen erfolgt dabei schichtweise ausgehend von CAD-Daten, die mit üblichen Rapid-Prototyping- oder Rapid-Modeling-Verfahren hergestellt werden. Vorteilhaft an diesen Verfahren ist, dass entsprechende Bauteile relativ einfach und kostengünstig herstellbar sind. Dies gilt insbesondere für Bauteile mit komplizierten Strukturen. Allerdings erfordert die Verwendung von Lasern oder Elektronenstrahlquellen einen relativ hohen apparativen Aufwand und eine entsprechende intensive Wartung, was insgesamt dazu führt, dass keine weiteren Kostensenkungen möglich sind.

Es ist daher Aufgabe der vorliegenden Erfindung ein Verfahren der eingangs genannten Art bereit zu stellen, welches eine relativ kostengünstige Herstellung von Bauteilen, insbesondere von Bauteilen von Strömungsmaschinen und zudem eine Vielzahl konstruktiver Gestaltungen dieser Bauteile gewährleistet.

Es ist weiterhin Aufgabe der vorliegenden Erfindung eine Vorrichtung der eingangs genannten Art bereit zu stellen, welche eine relativ kostengünstige Herstellung von Bauteilen, insbesondere von Bauteilen von Strömungsmaschinen und zudem eine Vielzahl konstruktiver Gestaltungen dieser Bauteile ermöglicht.

Die der Erfindung zu Grunde liegenden Aufgaben werden durch ein Verfahren mit den im Anspruch 1 dargelegten Merkmalen, sowie durch die im Anspruch 14 dargestellte Vorrichtung gelöst.

Vorteilhafte Ausgestaltungen mit zweckmäßigen Weiterbildungen der Erfindung sind in den jeweiligen Unteransprüchen angegeben, wobei vorteilhafte Ausgestaltungen des Verfahrens - soweit anwendbar - als vorteilhafte Ausgestaltungen der Vorrichtung und umgekehrt anzusehen sind.

Ein erfindungsgemäßes Verfahren zur Herstellung von Bauteilen mittels eines generativen Herstellungsverfahrens, insbesondere zur Herstellung von Bauteilen von Strömungsmaschinen, umfasst folgende Schritte: a) Schichtweiser Auftrag von mindestens einem pulverförmigen Bauteilwerkstoff auf eine Bauteilplattform; b) Herstellung eines Grünlings des herzustellenden Bauteils mittels einem lokalen Auftrag von mindestens einem flüssigen Bindemittel, wobei mindestens eine Auftragsdüse entsprechend der Schichtinformation des herzustellenden Bauteils und/oder des Grünlings über die aufgetragene Bauteilwerkstoffschicht geführt wird; c) Absenken der Bauteilplattform um eine vordefinierte Schichtdicke; d) Wiederholen der Schritte a) bis c) bis zur Fertigstellung des Grünling, e) Sintern des Grünlings, und f) Verdichten des gesinterten Grünlings mittels eines heißisostatischen Pressverfahrens. Das erfindungsgemäße Verfahren benötigt keine Laser- oder Elektronenstrahlquellen zur Ausführung eines generativen Herstellungsverfahrens. Zur Herstellung des Bauteils wird in einem ersten Schritt ein Grünling mittels des generativen Herstellungsverfahrens hergestellt. Hierfür wird lediglich eine Auftragsdüse benötigt, die die entsprechenden Bereiche des pulverförmigen Bauteilwerkstoffes schichtweise ausformt und miteinander verbindet. Dadurch kann das Verfahren insgesamt kostengünstig gestaltet werden. Zudem entfallen eine Reihe von aufwändigen Wartungsarbeiten, wie sie üblicherweise für Laser- oder Elektronenstrahlquellen erforderlich sind. Der pulverförmige Bauteilwerkstoffkann dabei aus Metall, einer Metall-Legierung, insbesondere einer Nickel-, Titan- oder Kobaltbasislegierung, Graphit, Keramik - insbesondere einer nichtoxidischen technischen Keramik wie zum Beispiel SiN-, Silikat oder einer Mischung davon bestehen. Vorteilhafterweise wird als Auftragsvorrichtung eine Rolle oder ein Wischer verwendet. Das Sintern des Grünlings kann dabei bei einer Temperatur unterhalb der Schmelztemperatur des verwendeten Bauteilwerkstoffes, wobei der Grünling zum Beispiel bei 800 bis 1200°C bei Verwendung eines Bauteilwerkstoffs aus einer Nickel-, Titan- oder Kobaltbasislegierung gesintert wird, um eine 95%ige Dichte (bezogen auf die Enddichte des Bauteils) zu erzielen. Vorteilhafterweise wird hierbei auch das Bindemittel ausgetrieben. Ein weiterer Vorteil eines derartigen Sintervorganges besteht in der Tatsache, dass bei dem Erreichen der genannten Dichte des gesinterten Grünlings das heißisostatische Pressen gemäß Verfahrensschritt f) ohne ein Kapseln des gesinterten Grünlings erfolgen kann. Auch dies trägt zur Kostenreduzierung des erfindungsgemäßen Verfahrens bei. Im Verfahrensschritt f) kann dabei der gesinterte Grünling bei einem Druck zwischen 20 und 300 MPa verdichtet werden. Zudem kann das heißisostatische Pressen in einer Schutzgasatmosphäre durchgeführt werden. Als flüssige Bindemittel können Polymere, insbesondere Polymethylmethacrylat (PMMA) oder Polyvinylpyrrolidon (PVP), verwendet werden.

In einer weiteren vorteilhaften Ausgestaltung des erfindungsgemäßen Verfahrens erfolgt das schichtweise Auftragen des mindestens einen pulverförmigen Bauteilwerkstoffs gemäß Verfahrensschritt a) derart, dass der Grünling und das hergestellte Bauteil unterschiedliche Werkstoffe und/oder Werkstoffeigenschaften in vordefinierten Bereichen des Grünlings und des Bauteils aufweisen. Die Verwendung unterschiedlicher Werkstoffe ist insbesondere bei hoch belasteten Bauteilen, wie zum Beispiel Rotoren von thermischen Gasturbinen besonders vorteilhaft. Hierdurch können die einzelnen Elemente der Rotoren, wie zum Beispiel die Rotorscheibe und die daran angeordneten Schaufeln oder Schaufelsegmente aus unterschiedlichen Materialien aufgebaut und entsprechend den auftretenden Belastungen ausgestaltet werden. Durch das erfindungsgemäße Verfahren können beispielsweise so genannte Blisks ("Bladed Disk") oder Blings ("Bladed Ring"), das heißt Integralrotoren einstückig hergestellt werden. Es ist aber auch möglich, dass die Rotorscheibe und die daran anzufügenden Schaufeln beziehungsweise der daran anzufügende Schaufelkranz oder die entsprechenden Schaufelsegmente separat hergestellt werden und anschließend mittels geeigneter Fügeverfahren zusammengefügt werden. Des Weiteren ist es möglich, dass das Bauteil eine Schaufel beziehungsweise ein Schaufelblatt, ein Schaufelsegment oder ein kompletter Schaufelkranz des Turbinenrotors ist und die Verfahrensschritte e) und f) an einer separat ausgebildeten Rotorscheibe zum Ansintern und Verbinden der Schaufel beziehungsweise des Schaufelblatts, des Schaufelsegments oder des Schaufelkranzes mit der Rotorscheibe durchgeführt werden. Die Verbindung zwischen Schaufel, Schaufelsegment oder Schaufelkranz und Rotorscheibe erfolgt dabei nicht durch übliche Fügeverfahren, sondern durch ein Ansintern des erfindungsgemäß hergestellten Grünlings und ein Verdichten des gesinterten Grünlings mittels des heißisostatischen Pressverfahrens. Besonders vorteilhaft ist diese Vorgehensweise bei Rotorscheiben aus nicht schmelzschweissgeeigneten Werkstoffen. Insbesondere kann das Bauteil ein Turbinenrotor einer Gasturbine eines Flugtriebwerks oder eines Teils davon sein.

In einer weiteren vorteilhaften Ausgestaltung des erfindungsgemäßen Verfahrens erfolgt das schichtweise Auftragen des pulverförmigen Bauteilwerkstoffs gemäß dem Verfahrensschritt a) mittels einer Auftragsvorrichtung, insbesondere mittels eines Rollers oder Wischers.

In einer weiteren vorteilhaften Ausgestaltung des erfindungsgemäßen Verfahrens wird die Form und der Materialaufbau des Grünlings und/oder des Bauteils als computergeneriertes Modell bestimmt und die daraus generierten Schichtinformationen zur Steuerung von mindestens einem Pulvervorratsbehälter, der Auftragsvorrichtung, der Bauteilplattform und der mindestens einen Auftragsdüse verwendet. Dadurch ist es möglich, dass die Bauteile bis auf die Endkontur genau hergestellt werden können. Des Weiteren ist es möglich, dass nach dem Verfahrensschritt d) und vor dem Verfahrensschritt e) ein Entfernen von nicht verbundenem pulverförmigen Bauteilwerkstoff erfolgt. Die nicht verbundenen pulverförmigen Schichten können jedoch auch zur Stützung der bereits verdichteten Bereiche des Grünlings im entsprechenden Pulverbett verbleiben.

Eine erfindungsgemäße Vorrichtung zur Herstellung von Bauteilen mittels eines generativen Herstellungsverfahrens, insbesondere zur Herstellung von Bauteilen von Strömungsmaschinen, umfasst mindestens einen, einen pulverförmigen Bauteilwerkstoff aufweisenden Pulvervorratsbehälter und mindestens eine Auftragsvorrichtung zum schichtweisen Auftrag des mindestens einen pulverförmigen Bauteilwerkstoffs auf eine fahrbare Bauteilplattform. Zudem weist die Vorrichtung mindestens eine Auftragsdüse zum lokalen Auftrag von mindestens einem Bindemittel auf die Schicht des pulverförmigen Bauteilwerkstoffs zur Herstellung eines Grünlings auf, wobei die mindestens eine Auftragsdüse entsprechend der Schichtinformation des herzustellenden Bauteils und/oder des Grünlings über die aufgetragene Bauteilwerkstoffschicht führbar ist. Durch die erfindungsgemäße Vorrichtung, die auf Laser-oder Elektronenstrahlquellen verzichtet, ist eine kostengünstige Herstellung von Bauteilen, insbesondere von Bauteilen von Strömungsmaschinen, möglich. Zudem ergibt sich durch die Verwendung eines generativen Herstellungsverfahrens eine Vielzahl konstruktiver Gestaltungsmöglichkeiten dieser Bauteile.

In einer weiteren vorteilhaften Ausgestaltung der erfindungsgemäßen Vorrichtung weist diese mindestens einen Computer und/oder einen Steuerrechner zur Generierung von mindestens einem die Form und den Materialaufbau des Bauteils und/oder des Grünlings bestimmenden Modells und zur Generierung einer aus dem Modell abgeleiteten Schichtinformation und/oder zur Steuerung des mindestens einen Pulvervorratsbehälters, der Auftragsvorrichtung, der Bauteilplattform und der mindestens einen Auftragsdüse auf. Dadurch ist es möglich, dass computergenerierte CAD-Daten direkt zur Steuerung der Vorrichtung und damit zur Herstellung des Grünlings und des Bauteils verwendet werden.

Das flüssige Bindemittel ist üblicherweise ein Polymer, insbesondere Polymethylmethacrylat (PMMA) oder Polyvinylpyrrolidon (PVP).

Ein erfindungsgemäßes Bauteil einer Strömungsmaschine, insbesondere ein Bauteil einer Gasturbine eines Flugtriebwerks, ist nach dem im Vorhergehenden beschriebenen Verfahren oder mittels der im Vorhergehenden ebenfalls beschriebenen Vorrichtung hergestellt.

Weitere Vorteile, Merkmale und Einzelheiten der Erfindung ergeben sich aus der nachfolgenden Beschreibung eines zeichnerisch dargestellten Ausführungsbeispiels. Dabei zeigen
Figur 1 eine schematische Darstellung einer erfindungsgemäßen Vorrichtung; und
Figur 2 eine schematische Detailansicht der Vorrichtung gemäß Figur 1.

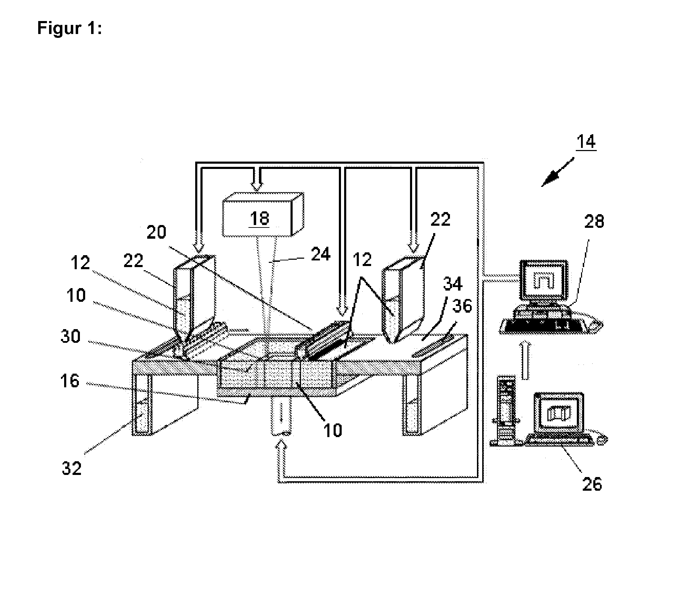

Die Figur 1 zeigt eine schematische Darstellung einer Vorrichtung 14 zur Herstellung von Bauteilen mittels eines generativen Herstellungsverfahrens, insbesondere zur Herstellung von Bauteilen von Strömungsmaschinen. Die Vorrichtung 14 umfasst dabei in dem dargestellten Ausführungsbeispiel zwei Pulvervorratsbehälter 22 zur Aufnahme eines pulverförmigen Bauteilwerkstoffs 12 sowie eine zwischen den Pulvervorratsbehältern 22 verfahrbare Auftragsvorrichtung 20 zum schichtweisen Auftrag des pulverförmigen Bauteilwerkstoffs 12 auf eine ebenfalls verfahrbare Bauteilplattform 16. In dem dargestellten Ausführungsbeispiel ist die Bauteilplattform 16 in der Senkrechten verfahrbar ausgebildet. Durch das Absenken der Bauteilplattform 16 und dem gleichzeitigen Auftrag des pulverförmigen Bauteilwerkstoffs 12 mittels der Auftragsvorrichtung 20 auf die Bauteilplattform 16 entsteht ein Pulverbett bestehend aus dem Bauteilwerkstoff 12, welches schichtförmig aufgebaut ist. Des Weiteren weist die Vorrichtung 14 eine schematisch dargestellte Auftragsdüse 18 zum lokalen Auftrag von mindestens einem Bindemittel auf eine obenliegende, zuletzt aufgetragene Schicht 30 des Pulverbetts. Das flüssige Bindemittel kann dabei ein Polymer, insbesondere Polymethylmethacrylat (PMMA) oder Polyvinylpyrrolidon (PVP) sein. Auch andere geeignete flüssige Bindemittel können verwendet werden und richten sich insbesondere nach der Art des Bauteilwerkstoffs 12. Von der Auftragsdüse 18 ausgehend ist ein Bindemittelstrahl 24 schematisch dargestellt. Der pulverförmige Bauteilwerkstoff 12 besteht in dem dargestellten Ausführungsbeispiel aus einer Nickelbasislegierung. Es ist aber auch möglich, dass der Bauteilwerkstoff aus einem anderen Metall, einer anderen Metall-Legierung wie zum Beispiel einer Titan- oder Kobaltbasislegierung, Graphit, Keramik, Silikat oder einer Mischung davon besteht.

Durch den lokalen Auftrag des Bindemittels wird ein Grünling 10 schichtweise aufgebaut, wobei die Auftragsdüse 18 entsprechend der Schichtinformation des herzustellenden Bauteils und/oder des Grünlings 10 über die aufgetragene Bauteilwerkstoffschicht 30 geführt wird.

Des Weiteren erkennt man, dass die Auftragsvorrichtung 20 als Wischer ausgebildet ist. Dabei ist der Wischer 20 derart ausgebildet, dass überschüssiges Pulvermaterial, das heißt Pulvermaterial, das nicht für die schichtweise Ausbildung des Pulverbetts verwendet wird, zu entsprechenden Auffangbehältern 32 transportiert wird. Hierfür weist ein Arbeitstisch 34 der Vorrichtung 14 entsprechende Öffnungen 36 auf, über die das überschüssige Pulvermaterial in die Pulverauffangbehälter 32 verbracht wird.

Die Vorrichtung 14 weist zudem einen Computer 26 und einen Steuerrechner 28 einerseits zur Generierung von einem die Form und den Materialaufbau des Bauteils und des Grünlings 10 bestimmenden Modells und zur Generierung einer aus dem Modell abgeleiteten Schichtinformation und andererseits zur entsprechenden Steuerung der Pulvervorratsbehälter 22, der Auftragsvorrichtung 20, der Bauteilplattform 16 und der Auftragsdüse 18 auf.

Nach Fertigstellung des Grünlings 10 wird dieser aus der Vorrichtung 14 entfernt, wobei noch an dem Grünling 10 haftendes, nicht verbundenes Pulvermaterial entfernt wird. Der Grünling 10 wird dann bei Temperaturen unterhalb der Schmelztemperatur des verwendeten Bauteilwerkstoffs 12 gesintert. Die Sintertemperatur liegt in dem dargestellten Ausführungsbeispiel, bei dem der Grünling 10 aus einer Nickelbasislegierung besteht, bei ca. 1150°C. Durch dieses Sintern erreicht der Grünling 10 ca. 95 % der Dichte des herzustellenden Bauteils. Zudem wird das Bindemittel ausgetrieben. Der gesinterte Grünling 10 wird dann abschließend mittels eines heißisostatischen Pressverfahrens verdichtet. Das heißisostatische Pressverfahren erfolgt bei einem Druck zwischen 20 und 300 MPa und wird über mehrere Stunden durchgeführt. Dadurch wird der gesinterte Grünling 10 auf 100 % endverdichtet.

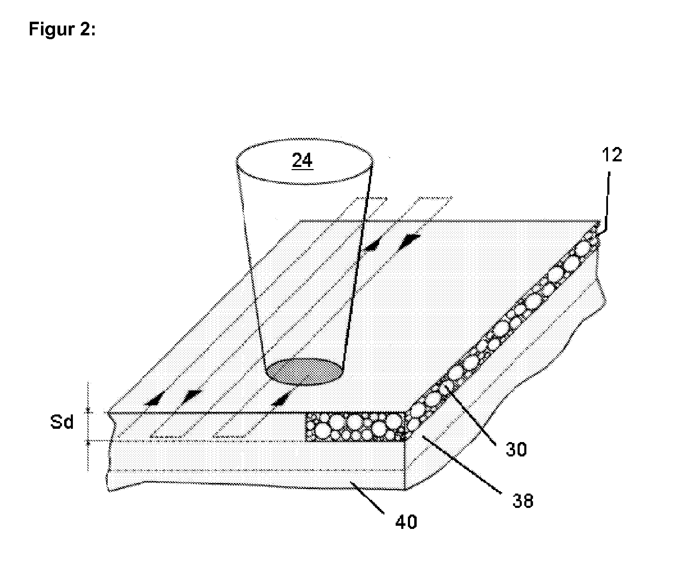

Figur 2 zeigt eine schematische Detailansicht der Vorrichtung 14 gemäß Figur 1. Man erkennt, dass das Pulverbett bestehend aus dem pulverförmigen Bauteilwerkstoff 12 schichtartig ausgebildet ist. Der Bindemittelstrahl 24 beziehungsweise die Auftragsdüse 18 wird scannerartig über die zuletzt aufgetragene Pulverschicht 30 geleitet, so dass es zu einer entsprechenden Verbindung des pulverförmigen Bauteilwerkstoffs 12 in diesen Bereichen kommt. Die unter der Pulverschicht 30 liegenden Schichten 38, 40 wurden in dem dargestellten Ausführungsbeispiel bereits bearbeitet und mittels der Bauteilplattform 16 (vergleiche Figur 1) abgesenkt. Die Schichtdicken Sd richten sich nach den Anforderungen des Grünlings 10 beziehungsweise des daraus herzustellenden Bauteils. Des Weiteren muss die Korngrößenverteilung des pulverförmigen Bauteilwerkstoffs 12 für die Bestimmung der Schichtdicken Sd berücksichtigt werden.

In verkürzter und verallgemeinerter Darstellung kann das der Erfindung zu Grunde liegende Verfahren wie folgt dargestellt werden:
1. Verfahren zur Herstellung von Bauteilen mittels eines generativen Herstellungsverfahrens, insbesondere zur Herstellung von Bauteilen von Strömungsmaschinen, dadurch gekennzeichnet, dass das Verfahren folgende Schritte umfasst:
   a) Schichtweiser Auftrag von mindestens einem pulverförmigen Bauteilwerkstoff (12) auf eine Bauteilplattform (16);
   b) Herstellung eines Grünlings (10) des herzustellenden Bauteils mittels einem lokalen Auftrag von mindestens einem flüssigen Bindemittel, wobei mindestens eine Auftragsdüse (18) entsprechend der Schichtinformation des herzustellenden Bauteils und/oder des Grünlings (10) über die aufgetragene Bauteilwerkstoffschicht (30) geführt wird;
   c) Absenken der Bauteilplattform (16) um eine vordefinierte Schichtdicke;
   d) Wiederholen der Schritte a) bis c) bis zur Fertigstellung des Grünlings (10);
   e) Sintern des Grünlings (10); und
   f) Verdichten des gesinterten Grünlings (10) mittels eines heiß-isostatischen Pressverfahrens.
2. Verfahren nach Punkt 1, **dadurch gekennzeichnet, dass** der pulverförmige Bauteilwerkstoff (12) aus Metall, einer Metall-Legierung, insbesondere einer Ni-, Ti- oder Co-Basislegierung, Graphit, Keramik, Silikat oder einer Mischung davon besteht.
3. Verfahren nach Punkt 1 oder 2, **dadurch gekennzeichnet, dass** das schichtweise Auftragen des mindestens einen pulverförmigen Bauteilwerkstoffs (12) gemäß dem Verfahrensschritt a) derart erfolgt, dass der Grünling (10) und das hergestellte Bauteil unterschiedliche Werkstoffe und/oder Werkstoffeigenschaften in vordefinierten Bereichen des Grünlings (10) und des Bauteils aufweist.
4. Verfahren nach einem der vorhergehenden Punkte, **dadurch gekennzeichnet, dass** das schichtweise Auftragen des pulverförmigen Bauteilwerkstoffs (12) gemäß dem Verfahrensschritt a) mittels einer Auftragsvorrichtung (20), insbesondere mittels eines Rollers oder Wischers erfolgt.
5. Verfahren nach einem der vorhergehenden Punkte, **dadurch gekennzeichnet, dass** die Form und der Materialaufbau des Grünlings (10) und/oder des Bauteils als computergeneriertes Modell bestimmt wird und die daraus generierten Schichtinformationen zur Steuerung von mindestens einem Pulvervorratsbehälter (22), der Auftragsvorrichtung (20), der Bauteilplattform (16) und der mindestens einen Auftragsdüse (18) verwendet werden.
6. Verfahren nach einem der vorhergehenden Punkte, **dadurch gekennzeichnet, dass** das flüssige Bindemittel ein Polymer, insbesondere Polymethylmethacrylat (PMMA) oder Polyvinylpyrrolidon (PVP), ist.
7. Verfahren nach einem der vorhergehenden Punkte, **dadurch gekennzeichnet, dass** nach dem Verfahrensschritt d) und vor dem Verfahrensschritt e) ein Entfernen von nicht verbundenem pulverförmigen Bauteilwerkstoff (12) erfolgt.
8. Verfahren nach einem der vorhergehenden Punkte, **dadurch gekennzeichnet, dass** das Sintern des Grünlings (10) bei einer Temperatur unterhalb der Schmelztemperatur des verwendeten Bauteilwerkstoffs (12) erfolgt.
9. Verfahren nach Punkt 8, **dadurch gekennzeichnet, dass** der Grünling (10) aus einer Ni-, Ti- und/oder Co-Basislegierung besteht und die Sintertemperatur 800 bis 1200°C beträgt.
10. Verfahren nach einem der vorhergehenden Punkte, **dadurch gekennzeichnet, dass** der gesinterte Grünling (10) im Verfahrensschritt f) bei einem Druck zwischen 20 und 300 MPa verdichtet wird.
11. Verfahren nach einem der vorhergehenden Punkte, **dadurch gekennzeichnet, dass** der Verfahrensschritt f) in einer Schutzgasatmosphäre durchgeführt wird.
12. Verfahren nach einem der vorhergehenden Punkte, **dadurch gekennzeichnet, dass** das Bauteil ein Turbinenrotor, insbesondere einer Gasturbine eines Flugtriebwerks oder ein Teil davon ist.
13. Verfahren nach Punkt 12, **dadurch gekennzeichnet, dass** das Bauteil eine Schaufel bzw. ein Schaufelblatt des Turbinenrotors ist und die Verfahrensschritte e) und f) an einer separat ausgebildeten Rotorscheibe zum Ansintern und Verbinden der Schaufel bzw. des Schaufelblatts mit der Rotorscheibe durchgeführt werden.

## Patentansprüche

1. Verfahren zur Herstellung von Bauteilen mittels eines generativen Herstellungsverfahrens, insbesondere zur Herstellung von Bauteilen von Strömungsmaschinen, **dadurch gekennzeichnet, dass** das Verfahren folgende Schritte umfasst:
a) Schichtweiser Auftrag von mindestens einem pulverförmigen Bauteilwerkstoff (12) auf eine Bauteilplattform (16);
b) Herstellung eines Grünlings (10) des herzustellenden Bauteils mittels einem lokalen Auftrag von mindestens einem flüssigen Bindemittel, wobei mindestens eine Auftragsdüse (18) entsprechend der Schichtinformation des herzustellenden Bauteils und/oder des Grünlings (10) über die aufgetragene Bauteilwerkstoffschicht (30) geführt wird;
c) Absenken der Bauteilplattform (16) um eine vordefinierte Schichtdicke;
d) Wiederholen der Schritte a) bis c) bis zur Fertigstellung des Grünlings (10);
e) Sintern des Grünlings (10); und
f) Verdichten des gesinterten Grünlings (10) mittels eines heiß-isostatischen Pressverfahrens.

2. Verfahren nach Anspruch 1, **dadurch gekennzeichnet, dass** der pulverförmige Bauteilwerkstoff (12) aus Metall, einer Metall-Legierung, insbesondere einer Ni-, Ti-oder Co-Basislegierung, Graphit, Keramik, Silikat oder einer Mischung davon besteht.

3. Verfahren nach Anspruch 1 oder 2, **dadurch gekennzeichnet, dass** das schichtweise Auftragen des mindestens einen pulverförmigen Bauteilwerkstoffs (12) gemäß dem Verfahrensschritt a) derart erfolgt, dass der Grünling (10) und das hergestellte Bauteil unterschiedliche Werkstoffe und/oder Werkstoffeigenschaften in vordefinierten Bereichen des Grünlings (10) und des Bauteils aufweist.

4. Verfahren nach einem der vorhergehenden Ansprüche, **dadurch gekennzeichnet, dass** das schichtweise Auftragen des pulverförmigen Bauteilwerkstoffs (12) gemäß dem Verfahrensschritt a) mittels einer Auftragsvorrichtung (20), insbesondere mittels eines Rollers oder Wischers erfolgt.

5. Verfahren nach einem der vorhergehenden Ansprüche, **dadurch gekennzeichnet, dass** die Form und der Materialaufbau des Grünlings (10) und/oder des Bauteils als computergeneriertes Modell bestimmt wird und die daraus generierten Schichtinformationen zur Steuerung von mindestens einem Pulvervorratsbehälter (22), der Auftragsvorrichtung (20), der Bauteilplattform (16) und der mindestens einen Auftragsdüse (18) verwendet werden.

6. Verfahren nach einem der vorhergehenden Ansprüche, **dadurch gekennzeichnet, dass** das flüssige Bindemittel ein Polymer, insbesondere Polymethylmethacrylat (PMMA) oder Polyvinylpyrrolidon (PVP), ist.

7. Verfahren nach einem der vorhergehenden Ansprüche, **dadurch gekennzeichnet, dass** nach dem Verfahrensschritt d) und vor dem Verfahrensschritt e) ein Entfernen von nicht verbundenem pulverförmigen Bauteilwerkstoff (12) erfolgt.

8. Verfahren nach einem der vorhergehenden Ansprüche, **dadurch gekennzeichnet, dass** das Sintern des Grünlings (10) bei einer Temperatur unterhalb der Schmelztemperatur des verwendeten Bauteilwerkstoffs (12) erfolgt.

9. Verfahren nach Anspruch 8, **dadurch gekennzeichnet, dass** der Grünling (10) aus einer Ni-, Ti- und/oder Co-Basislegierung besteht und die Sintertemperatur 800 bis 1200°C beträgt.

10. Vorrichtung zur Herstellung von Bauteilen mittels eines generativen Herstellungsverfahrens, insbesondere zur Herstellung von Bauteilen von Strömungsmaschinen, mit mindestens einem, einen pulverförmigen Bauteilwerkstoff (12) aufweisenden Pulvervorratsbehälter (22) und mindestens eine Auftragsvorrichtung (20) zum schichtweisen Auftrag des mindestens einen pulverförmigen Bauteilwerkstoffs (12) auf eine verfahrbare Bauteilplattform (16), **dadurch gekennzeichnet, dass** die Vorrichtung (14) mindestens eine Auftragsdüse (18) zum lokalen Auftrag von mindestens einem Bindemittel auf die Schicht des pulverförmigen Bauteilwerkstoffs (12) zur Herstellung eines Grünlings (10) aufweist, wobei die mindestens eine Auftragsdüse (18) entsprechend der Schichtinformation des herzustellenden Bauteils und/oder des Grünlings (10) über die aufgetragene Bauteilwerkstoffschicht (30) führbar ist.

11. Vorrichtung nach Anspruch 10, **dadurch gekennzeichnet, dass** der pulverförmige Bauteilwerkstoff (12) aus Metall, einer Metall-Legierung, insbesondere einer Ni-, Ti- oder Co-Basislegierung, Graphit, Keramik, Silikat oder einer Mischung davon besteht.

12. Vorrichtung nach Anspruch 10 oder 11, **dadurch gekennzeichnet, dass** die Auftragsvorrichtung (20) ein Roller oder Wischer ist.

13. Vorrichtung nach einem der Ansprüche 10 bis 12, **dadurch gekennzeichnet, dass** die Vorrichtung (14) mindestens einen Computer (26) und/oder einen Steuerrechner (28) zur Generierung von mindestens einem die Form und den Materialaufbau des Bauteils und/oder des Grünlings (10) bestimmenden Modells und zur Generierung einer aus dem Modell abgeleiteten Schichtinformation und/oder zur Steuerung des mindestens einen Pulvervorratsbehälters (22), der Auftragsvorrichtung (20), der Bauteilplattform (16) und der mindestens einen Auftragsdüse (18).

14. Vorrichtung nach einem der Ansprüche 10 bis 13, **dadurch gekennzeichnet, dass** das flüssige Bindemittel ein Polymer, insbesondere Polymethylmethacrylat (PMMA) oder Polyvinylpyrrolidon (PVP), ist.

15. Bauteil einer Strömungsmaschine, insbesondere Bauteil einer Gasturbine eines Flugtriebwerks hergestellt nach einem Verfahren gemäß den Ansprüchen 1 bis 9 oder mit einer Vorrichtung gemäß den Ansprüchen 10 bis 14.
